# EUROPÄISCHE PATENTSCHRIFT

(11) **EP 4 605 216 B1**
(45) Veröffentlichungstag und Bekanntmachung des Hinweises auf die Patenterteilung: **18.11.2026**
(21) Anmeldenummer: 23798333.3
(22) Anmeldetag: 18.10.2023
(51) Int. Cl.: B29C 48/31, B29C 48/08, B29C 48/25, B29C 48/30, B29C 48/92, B29C 48/07

(54) **VORRICHTUNG ZUR EINSTELLUNG DES SPALTS EINER BREITSCHLITZDUESE**
DEVICE FOR SETTING THE GAP OF A SLIT DIE
DISPOSITIF DE RÉGLAGE DE L'ÉCARTEMENT D'UNE FILIÈRE À FENTE

(30) Priorität: 18.10.2022 AT 508022022
(43) Veröffentlichungstag der Anmeldung: 27.08.2025
(73) Patentinhaber: SBI Mechatronik GmbH, 2020 Hollabrunn (AT)
(72) Erfinder: KROTTENDORFER, Franz, 3714 Pulkau (AT); WEINKOPF, Johannes, 3743 Röschitz (AT); LOHIA, Siddharth, Kanpur Nagar 208002 Uttar Pradesh (IN)
(74) Vertreter: Puchberger & Partner Patentanwälte
(86) Internationale Anmeldenummer: PCT/AT2023/060355
(87) Internationale Veröffentlichungsnummer: WO 2024/081984

(56) Entgegenhaltungen:
- JP-A- 2001 293 767
- JP-A- 2003 145 007
- JP-A- 2021 070 235
- JP-A- H05 286 015
- US-A1- 2012 024 226

## Beschreibung

Die Erfindung betrifft eine Vorrichtung zur Einstellung des Spalts einer Breitschlitzdüse zur Herstellung von flachbahnigen Extrusionsprodukten, wie beispielsweise Folien, wobei die Breitschlitzdüse über eine flexible Lippe verfügt, an deren Länge in regelmäßigen Abständen mehrere Stellelemente zur Einstellung des Spaltprofils der Lippe angeordnet sind.

### Stand der Technik

Breitschlitzdüsen werden beispielsweise an Extrusionsanlagen zur Herstellung von Kunststofffolien- und platten eingesetzt und kommen auch bei Beschichtungsprozessen zur Anwendung. In diesen Extrusionsanlagen wird ein thermoplastischer Kunststoff geschmolzen und tritt dann durch den Spalt der Breitschlitzdüse aus, um das Material in Folienform zu bringen. Dabei ist es gewünscht, dass die erzeugte Folienbahn über die gesamte Breite eine gleichmäßige Dicke oder eine vorgegebene Profilierung aufweist. Um dies zu erreichen, muss der Spalt je nach Herstellungsprozess auf die gewünschte Dicke voreingestellt werden. Nach einer ersten Anlaufphase kann das Dickenprofil der erzeugten Folienbahn gemessen werden, um eine Feinabstimmung durchzuführen. Je nach Material, Prozessgeschwindigkeit und aufgrund anlagespezifischer Parameter kommt es bei der Herstellung im Dickenprofil zu Abweichungen, welche dadurch ausgeglichen werden, dass die Höhe des Düsenspalts an mehreren Stellen über die gesamte Breite der Breitschlitzdüse hinweg mittels Stellelementen an einer flexiblen Lippe einstellbar ist.

Im einfachsten Fall handelt es sich bei diesen Stellelementen um Schrauben, welche jeweils manuell verdreht werden und mit ihren unteren Enden gegen die flexible Lippe drücken, um den Düsenspalt einzustellen. Es erfordert eine mit der Anlage vertraute Fachkraft, welche die Einstellungen vornimmt. Eine Anpassung bei Abweichungen im laufenden Betrieb ist schwierig und langsam, wodurch es zu Materialverlusten und damit verbundenen Mehrkosten kommt. Bei einem Produktwechsel kommt es zudem zu höheren Stillstandszeiten der Anlage, bis alle Stellelemente nacheinander neu eingestellt sind.

Um vor allem eine Feineinstellung des Profils während des Betriebs zu ermöglichen, kommen in der Praxis meist Thermobolzeneinheiten in den Stellelementen zum Einsatz. Die grobe Voreinstellung der Anlage auf das gewünschte Produkt erfolgt dabei meist weiterhin von Hand über Stellschrauben. Dadurch kann die Spalthöhe beispielsweise im Bereich von 1 bis 3 mm voreingestellt werden. Eine Feineinstellung während des Betriebs aufgrund des erzeugten Dickenprofils erfolgt dann durch Thermobolzen, auch Wärmedehnbolzen genannt, an jedem Stellelement. Diese erlauben eine Feineinstellung des Düsenspalts im Bereich von etwa 100 µm bis 300 µm. Die Thermobolzen sind thermische Stellelemente, welche sich aufgrund zugeführter Heizleistung ausdehnen oder zusammenziehen und die flexible Lippe und damit den Düsenspalt verstellen. Diese Thermobolzen benötigen jedoch permanent eine relativ hohe Energiezufuhr zur Bereitstellung der Heizleistung, was insgesamt bei breiteren Anlagen zu erheblichen Mehrkosten im Betrieb führt. Außerdem benötigt es beim Verstellen einige Zeit, bis sich der jeweilige Bolzen erwärmt oder abgekühlt hat, wodurch diese Thermobolzen träge in der Reaktion sind, was wiederum zu erhöhtem Materialverlust führt. Bei einem Produktwechsel muss schließlich aufgrund des geringen möglichen Verstellweges wieder eine Einstellung per Hand erfolgen, was zu den oben genannten erhöhten Standzeiten der Anlage führt.

In der EP 265700 A1 ist eine Vorrichtung zur Einstellung einer Breitschlitzdüse offenbart, bei welcher ein an einer parallel zur Breitschlitzdüse verlaufenden Traverse bewegbarer Schraubendreher dafür eingesetzt wird, die andernfalls manuell zu betätigenden Stellschrauben der Stellelemente zu betätigen. Dadurch können die Stellelemente automatisch bei einem Produktwechsel betätigt werden und auch eine Anpassung des Dickenprofils im laufenden Betrieb ist möglich. Nachteilig dabei ist, dass die Anlage einen relativ hohen Steueraufwand hat, damit der Schraubendreher auch jedesmal eine korrekte Kopplung mit den Stellschrauben erreicht. Außerdem kann hier jeweils immer nur eine Stellschraube zu einem Zeitpunkt betätigt werden, was zwar aufgrund der Automatisierung schneller ist als von Hand, aber gerade im laufenden Betrieb immer noch vergleichsweise langsam ist. Auch weisen die Stellschrauben der Stellelemente das Problem auf, dass sie im Betrieb ihre Position leicht verändern können und dadurch ein oftmaliges Nachjustieren nötig ist.

Automatische Stellsysteme mit zahlreichen Motoren für einzelne Stellschrauben bedeuten in der Praxis, dass weniger Stellelemente nebeneinander platziert werden können. Da die Motoren eine entsprechende Leistung erbringen müssen und daher baulich nicht so klein fertigbar sind, kann der oftmals gewünschte Abstand von etwa 2,5 cm zwischen zwei Stellelementen nicht eingehalten werden. Auch sind entsprechende Anlagen aufgrund der zahlreichen Motoren sehr kostspielig, erlauben dabei aber gleichzeitig keine hochauflösende Profilanpassung über die gesamte Breite der Düse.

Die JP 2001 293 767 A zeigt eine gattungsgemäße Vorrichtung zur Einstellung des Spalts einer Breitschlitzdüse, bei der ein Hebel drehbar mit einer konischen Platte verbunden ist, wobei durch Verschieben der konischen Platte Druckstifte zur Einstellung des Spalts bewegt werden können. Weitere Vorrichtungen zur Einstellung des Spalts einer Breitschlitzdüse sind in den Druckschriften JP 2003 145 007 A, JP 2021 070 235 A, US 2012/024 226 A1 und JP H05 286015 A gezeigt.

### Darstellung der Erfindung

Aufgabe der vorliegenden Erfindung ist es somit, eine Vorrichtung zum Einstellen des Spalts einer Breitschlitzdüse zu schaffen, welche die oben genannten Nachteile beseitigt und über die gesamte Breite der Breitschlitzdüse hinweg eine hochauflösende Profileinstellung ermöglicht. Die Kosten pro Stellelement sollen dabei niedrig gehalten werden und die Stellelemente sollen selbsthemmend in der jeweils eingestellten Position verbleiben, um oftmaliges Nachjustieren zu vermeiden. Die Stellelemente sollen ebenfalls kompakt genug aufgebaut sein, um dicht nebeneinander entlang der flexiblen Lippe der Breitschlitzdüse platzierbar zu sein. Eine rasche und exakte Verstellung an allen Stellelementen gleichzeitig sowohl im Bereich der groben Einstellung als auch im Bereich der Feineinstellung während des Betriebs soll ermöglicht werden. Außerdem soll die Vorrichtung nur einen geringen thermischen Übergang von der Breitschlitzdüse und insbesondere von der flexiblen Lippe auf die Vorrichtung selbst aufweisen.

Diese Aufgabe wird durch die vorliegende Erfindung dadurch gelöst, dass jedes Stellelement einen Antrieb, vorzugsweise in Form eines Schrittmotors umfasst, wobei der Antrieb eine Schubstange betätigt, welche gelenkig mit dem längeren Arm eines zweiseitigen Hebels verbunden ist, und wobei der kürzere Arm des Hebels mit einem linear geführten Druckstift zusammenwirkt, welcher seinerseits auf die flexible Lippe einwirkt, um in diesem Bereich den Spalt einzustellen. Durch die Anordnung mit einem zweiseitigen Hebel ist es möglich, die nötigen Kräfte für den Verstellweg mit einem entsprechend kleinen und günstigen Antrieb, beispielsweise in Form eines Elektroschrittmotors, aufzubringen. Durch die kompakte Bauweise ist es möglich, kostengünstig viele dieser Stellelemente auch in kleinerem Abstand zueinander entlang einer Breitschlitzdüse zu platzieren. Da jedes Stellelement direkt angesteuert wird, können auch alle gleichzeitig verstellt werden und damit kann sowohl die Grobeinstellung beim Produktwechsel als auch die Feineinstellung im laufenden Betrieb präzise und schnell durchgeführt werden. Die Vorrichtung hat ferner einen deutlich geringeren Energiebedarf als bekannte Thermobolzenanlagen, welche zur Einhaltung eines Profils permanent mit Energie versorgt werden müssen. Die erfindungsgemäße Vorrichtung hingegen verbraucht nur Energie während des Einstellvorgangs selbst. Durch die Aufbringung der Kraft über den linear geführten Druckstift im vorderen Bereich der flexiblen Lippe ist es möglich, mit sehr geringem Kraftaufwand auch sehr präzise Einstellungen vorzunehmen, ohne dass diese sich über Zeit verstellen. Der zweiseitige Hebel erlaubt eine deutliche Kraftreduktion bei der Verstellung gegenüber Vorrichtungen, bei denen die gesamte Hebelkraft lediglich am Drehpunkt der flexiblen Lippe angreift. Da der Hebel über einen zusätzlichen Drehpunkt verfügt, können je nach Anwendungsfall die Hebelkräfte sehr einfach durch Verschieben des Drehpunkts am Hebel oder Verändern der Hebellänge angepasst werden, ohne dass die Genauigkeit der Einstellung gerade im Feinabstimmungsbereich darunter leidet. Die Vorrichtung kann dadurch allein durch Modifikation des Bauteils des Hebels an unterschiedlichste Breitschlitzdüsenvorrichtungen mit unterschiedlichen Krafterfordernissen angepasst werden.

Gemäß einer bevorzugten Ausführungsform ist es dabei vorgesehen, dass die Schubstange eine Spindel mit einem Außengewinde ist, welche in eine vom Antrieb drehbare Buchse mit Innengewinde eingreift und mit dem Gelenk am längeren Arm des Hebels verbunden ist, oder umgekehrt die Spindel vom Antrieb direkt drehbar gelagert ist und in eine mit dem Gelenk am längeren Arm des Hebels verbundene Buchse mit Innengewinde eingreift. Diese Ausführungsform ist besonders kostengünstig zu fertigen und führt zu einer Selbsthemmung der Druckstifte, wodurch ein Verstellen derselben im Betrieb effektiv verhindert wird.

Dabei ist erfindungsgemäß vorgesehen, dass der zweiseitige Hebel ein Winkelhebel ist, wobei der längere Arm des Hebels in etwa in der gleichen Längsrichtung wie die Druckstifte angeordnet ist und der kürzere Arm des Hebels in etwa normal zur Längsrichtung der Druckstifte verläuft. Auf diese Weise kann jedes Stellelement besonders platzsparend und kompakt realisiert und an der Anlage verbaut werden.

Es ist ferner ein bevorzugtes Merkmal, dass die Stellelemente im Bereich der Druckstifte entlang der Breitschlitzdüse in einem Abstand von etwa 2 cm bis 3 cm, bevorzugt von etwa 2,5 cm zueinander angeordnet sind. Dadurch kann das Dickenprofil in einer hohen Auflösung über die gesamte Breite der Breitschlitzdüse hinweg justiert werden.

Gemäß einer bevorzugten Ausführungsform ist es ein weiteres Merkmal, dass die Stellelemente im Bereich der Antriebe in zwei parallel zur Breitschlitzdüse verlaufenden Reihen zueinander versetzt angeordnet sind, sodass wechselweise jeweils ein Stellelement einer Reihe und eines aus der anderen Reihe nebeneinander liegen. Bei besonders engem Abstand zwischen den Stellelementen können diese auf zwei Reihen aufgeteilt effizient und platzsparend verbaut werden.

Es ist ein weiteres bevorzugtes Merkmal, dass der Druckstift linear beweglich in einem Anschlusselement geführt ist, wobei das Anschlusselement der Verbindung der Vorrichtung mit der Breitschlitzdüse dient, und wobei das Anschlusselement über zwei Stege in einer entsprechenden Aufnahme an der Breitschlitzdüse lagerbar ist. Die Anschlusselemente können ferner noch thermisch isolierende Materialien oder Beschichtungen aufweisen. Dadurch ist es möglich, die Vorrichtung weitestgehend von der Breitschlitzdüse thermisch zu entkoppeln, da lediglich im Bereich der beiden Stege sowie über die Spitze der Druckstifte ein Kontakt zur Breitschlitzdüse gegeben ist. Die flexible Lippe der Breischlitzdüse weist oftmals eine eigene Heizeinrichtung auf, damit das zu extrudierende Material am Austrittsspalt die passende Temperatur aufweist. Es ist wünschenswert, dass die hier eingebrachte Energie nicht über die Verstellvorrichtung abgetragen wird. Ein hoher Wärmeübertrag von der Breitschlitzdüse auf die Verstellvorrichtung würde andernfalls Probleme bei der gleichbleibenden Qualität der Folie verursachen oder zumindest zu Energieverlusten führen, da mehr Heizleistung in die Breitschlitzdüse eingebracht werden muss, welche dann lediglich in der Verstellvorrichtung an die Umwelt abgegeben wird.

Dabei ist es ein weiteres bevorzugtes Merkmal, dass der Druckstift an beiden Enden spitz zulaufend oder abgerundet ist, sodass die Berührungspunkte zwischen der flexiblen Lippe der Breitschlitzdüse und dem Druckstift sowie zwischen dem Druckstift und dem zweiseitigen Hebel möglichst klein bzw. nahezu punktförmig sind, wodurch auch nur ein geringer direkter Wärmeübergang zwischen diesen Bauteilen möglich ist. Durch die wenigen, weitgehend punktförmigen Berührungspunkte mit der meist beheizten flexiblen Lippe der Breischlitzdüse und in weiterer Folge mit dem zweiseitigen Hebel, kommt es auch bei längerem Betrieb nur zu einer geringen direkten Wärmeübertragung zwischen der Breitschlitzdüse und der Verstellvorrichtung.

Schließlich ist es ein weiteres bevorzugtes Merkmal, dass eine Steuereinheit vorgesehen ist, welche mit allen Antrieben aller Stellelemente einer Breitschlitzdüse verbunden ist, wobei die Steuereinheit aufgrund von Sensordaten über das momentane Dickenprofil des extrudierten Produkts und/oder aufgrund von Nutzereingaben die einzelnen Stellelemente in die gewünschte Position bringt. Bestehende Anlagen können bei laufendem Extrusionsprozess auf unterschiedliche Art das Dickenprofil des erzeugten Produkts bestimmen und diese Daten dem Bedienpersonal zur Verfügung stellen. Eine entsprechende Steuereinheit kann diese Daten direkt verarbeiten, um die einzelnen Stellelemente zeitgleich dem gewünschten Profil anzupassen. Über Benutzereingaben können auch grobe Einstellungen am Profil, beispielsweise bei einem Produktwechsel, eingegeben werden, wonach alle Stellelemente zeitgleich und rasch auf das neu eingegebene Profil verstellt werden.

### Kurze Beschreibung der Zeichnungen

Die Erfindung wird nun in größerem Detail anhand eines Ausführungsbeispiels sowie mit Hilfe der beiliegenden Figuren beschrieben. Dabei zeigen
Fig. 1 eine schematische Schnittansicht durch ein Stellelement,
Fig. 2 eine schematische Detailfrontansicht auf mehrere in zwei Reihen angeordnete Stellelemente und
Fig. 3 zeigt eine schematische Schnittansicht im Bereich der Druckstifte und des Anschlusselements an der Breitschlitzdüse.

### Weg(e) zur Ausführung der Erfindung

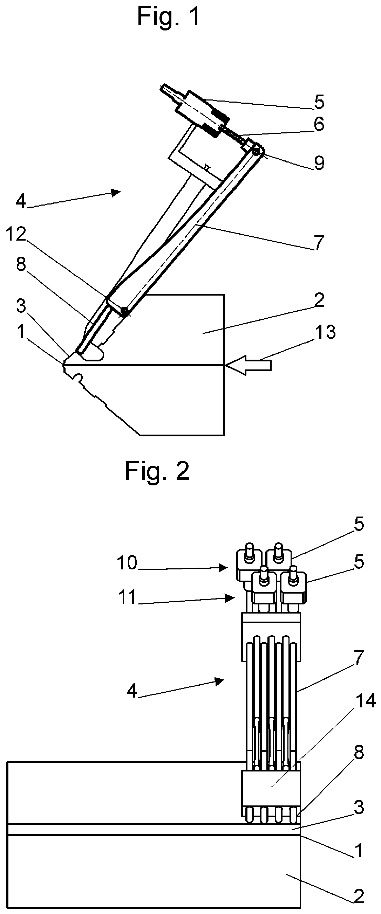

In der Fig. 1 ist sehr schematisch eine Breitschlitzdüse 2 mit einem erfindungsgemäßen Stellelement 4 in einer Schnittansicht dargestellt. Das zu extrudierende Material wird in Pfeilrichtung 13 durch die Breitschlitzdüse 2 in Richtung Spalt 1 transportiert. Die Spalthöhe wird dabei durch die flexible Lippe 3 bestimmt, welche mittels der Stellelemente 4 an mehreren Stellen entlang der Breitschlitzdüse 2 einstellbar ist.

Jedes Stellelement 4 weist einen Antrieb 5, hier in Form eines Schrittmotors auf, welcher eine Schubstange 6, beispielsweise eine Spindel betätigt. Die Schubstange 6 ist über ein Gelenk 9 mit einem zweiseitigen Hebel 7 verbunden. Der Hebel 7 ist mit seinem Drehpunkt 12 an der Anlage gelagert. Die Schubstange 6 greift dabei am Ende des längeren Hebelarms an, um diesen in Richtung zum Antrieb 5 oder vom Antrieb 5 weg zu bewegen. Der Hebel 7 ist im gezeigten Ausführungsbeispiel als Winkelhebel ausgebildet, wobei der kurze Hebelarm als Verdickung des Gesamthebels 7 ausgebildet ist und von seiner Wirkrichtung im Wesentlichen normal zur Wirkrichtung des ersten Hebelarms verläuft. Nahe dem Ende des kurzen zweiten Hebelarms kommt dieser mit einem Druckstift 8 in Kontakt. Wird der Hebel 7 über die Schubstange 6 beispielsweise in Richtung des Antriebs 5 gezogen, so drückt der zweite kurze Hebelarm den Druckstift 8 nach unten auf die flexible Lippe 3 und der Spalt 1 der Breitschlitzdüse 2 wird somit in diesem Bereich enger gestellt. Eine selbständige Rückstellung ist erstens dadurch verhindert, dass der Angriffspunkt des Druckstifts am kurzen Hebelarm eine deutlich höhere Kraft aufbringen müsste, um den ersten Hebelarm überhaupt zu bewegen und zweitens dadurch, dass die als Spindel ausgebildete Schubstange 6 eine ungewollte Bewegung in Achsrichtung des Antriebs 5 verhindert.

In der Fig. 2 sind schematisch vier Stellelemente 4 nebeneinander an einer Breitschlitzdüse 2 dargestellt. Die Stellelemente 4 sind in zwei Reihen 10,11 angeordnet, wodurch diese sehr dicht nebeneinander anordenbar sind. Dabei befindet sich jeweils abwechselnd ein Stellelement 4 der hinteren Reihe 10 neben einem Stellelement 4 der vorderen Reihe 11. Da die Konstruktion der Stellelemente 4 über die relativ langen und dennoch kompakt zu verbauenden Hebel 7 wenig Antriebskraft aufbringen muss, um die Druckstifte 8 und damit die flexible Lippe 3 zu verstellen, können auch kostengünstigere schwächere und damit kleinere Motoren als Antriebe 5 eingesetzt werden, was bei Konstruktionen mit direkt angetriebenen Stellschrauben oder mit Übersetzungsgetrieben nicht möglich ist.

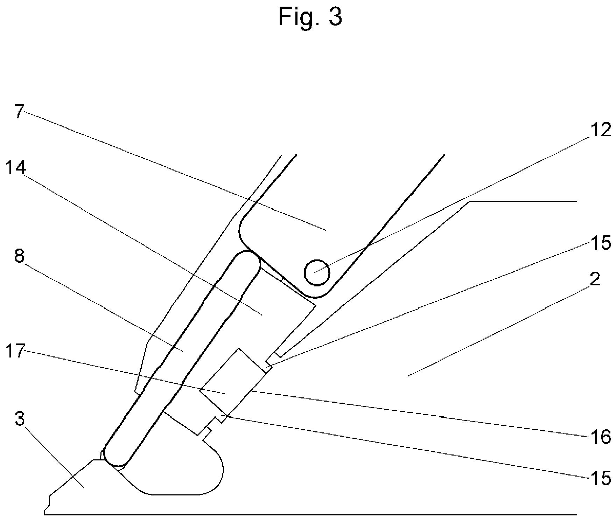

Fig. 3 zeigt einen Detailausschnitt der Verstellvorrichtung im vorderen Bereich der Breitschlitzdüse 2. Von der Breitschlitzdüse 2 ist lediglich der obere Teil mit der flexiblen Lippe 3 dargestellt. Die Verstellvorrichtung wird über die Stege 15 eines Anschlusselements 14 an der Breitschlitzdüse 2 in einer entsprechend dafür vorgesehenen Aufnahme 16 gelagert. Zwischen den Stegen 15 befindet sich im Anschlusselement 14 eine Ausnehmung 17, welche den Durchtritt von Luft erlaubt. Die Kontaktpunkte zwischen Breitschlitzdüse 2 und dem Anschlusselement 14 beschränken sich daher auf diesen Lagerungsbereich, wodurch nur ein geringer direkter Wärmeübertrag von der Breitschlitzdüse 2 auf das Anschlusselement 14 und damit auf die Verstellvorrichtung möglich ist. Die Druckstifte 8 weisen ferner an beiden Enden abgerundete Endabschnitte auf, wodurch auch hier der Kontaktpunkt zwischen der flexiblen Lippe 3, welche meist eine eigene Heizeinrichtung aufweist, und dem Druckstift 8 bzw. zwischen dem Druckstift 8 und dem Hebel 7 minimiert sind. Auch hier kann daher kaum ein direkter Wärmeübertrag erfolgen, wodurch Energie eingespart und die Produktqualität der extrudierten Folie erhöht wird.

## Patentansprüche

1. Vorrichtung zur Einstellung des Spalts (1) einer Breitschlitzdüse (2) zur Herstellung von flachbahnigen Extrusionsprodukten, wie beispielsweise Folien, wobei die Breitschlitzdüse (2) über eine flexible Lippe (3) verfügt, an deren Länge in regelmäßigen Abständen mehrere Stellelemente (4) zur Einstellung des Spaltprofils der Lippe (3) angeordnet sind, wobei jedes Stellelement (4) einen Antrieb (5), vorzugsweise in Form eines Schrittmotors umfasst, wobei der Antrieb (5) eine Schubstange (6) betätigt, welche gelenkig mit dem längeren Arm eines zweiseitigen Hebels (7) verbunden ist, und wobei der kürzere Arm des Hebels (7) mit einem linear geführten Druckstift (8) zusammenwirkt, welcher seinerseits auf die flexible Lippe (3) einwirkt, um in diesem Bereich den Spalt (1) einzustellen, **dadurch gekennzeichnet, dass** der zweiseitige Hebel (7) ein Winkelhebel ist, wobei der längere Arm des Hebels (7) in etwa in der gleichen Längsrichtung wie die Druckstifte (8) angeordnet ist und der kürzere Arm des Hebels (7) in etwa normal zur Längsrichtung der Druckstifte (8) verläuft.

2. Vorrichtung zur Einstellung des Spalts (1) einer Breitschlitzdüse (2) nach Anspruch 1, **dadurch gekennzeichnet, dass** die Schubstange (6) eine Spindel mit einem Außengewinde ist, welche in eine vom Antrieb (5) drehbare Buchse mit Innengewinde eingreift und mit dem Gelenk (9) am längeren Arm des Hebels (7) verbunden ist, oder umgekehrt die Spindel vom Antrieb (5) direkt drehbar gelagert ist und in eine mit dem Gelenk (9) am längeren Arm des Hebels (7) verbundene Buchse mit Innengewinde eingreift.

3. Vorrichtung zur Einstellung des Spalts (1) einer Breitschlitzdüse (2) nach einem der Ansprüche 1 oder 2, **dadurch gekennzeichnet, dass** die Stellelemente (4) im Bereich der Druckstifte (8) entlang der Breitschlitzdüse (2) in einem Abstand von etwa 2 cm bis 3 cm, bevorzugt von etwa 2,5 cm zueinander angeordnet sind.

4. Vorrichtung zur Einstellung des Spalts (1) einer Breitschlitzdüse (2) nach einem der Ansprüche 1 bis 3, **dadurch gekennzeichnet, dass** die Stellelemente (4) im Bereich der Antriebe (5) in zwei parallel zur Breitschlitzdüse (2) verlaufenden Reihen (10,11) zueinander versetzt angeordnet sind, sodass wechselweise jeweils ein Stellelement (4) einer Reihe (10) und eines aus der anderen Reihe (11) nebeneinander liegen.

5. Vorrichtung zur Einstellung des Spalts (1) einer Breitschlitzdüse (2) nach einem der Ansprüche 1 bis 4, **dadurch gekennzeichnet, dass** der Druckstift (8) linear beweglich in einem Anschlusselement (14) geführt ist, wobei das Anschlusselement (14) der Verbindung der Vorrichtung mit der Breitschlitzdüse (2) dient, und wobei das Anschlusselement (14) über zwei Stege (15) in einer entsprechenden Aufnahme (16) an der Breitschlitzdüse (2) lagerbar ist.

6. Vorrichtung zur Einstellung des Spalts (1) einer Breitschlitzdüse (2) nach einem der Ansprüche 1 bis 5, **dadurch gekennzeichnet, dass** der Druckstift (8) an beiden Enden spitz zulaufend oder abgerundet ist, sodass die Berührungspunkte zwischen der flexiblen Lippe (3) der Breitschlitzdüse (2) und dem Druckstift (8) sowie zwischen dem Druckstift (8) und dem zweiseitigen Hebel (7) möglichst klein bzw. nahezu punktförmig sind, wodurch auch nur ein geringer direkter Wärmeübergang zwischen diesen Bauteilen möglich ist.

7. Vorrichtung zur Einstellung des Spalts (1) einer Breitschlitzdüse (2) nach einem der Ansprüche 1 bis 6, **dadurch gekennzeichnet, dass** eine Steuereinheit vorgesehen ist, welche mit allen Antrieben (5) aller Stellelemente (4) einer Breitschlitzdüse (2) verbunden ist, wobei die Steuereinheit aufgrund von Sensordaten über das momentane Dickenprofil des extrudierten Produkts und/oder aufgrund von Nutzereingaben die einzelnen Stellelemente (4) in die gewünschte Position bringt.

## Claims

1. A device for adjusting the gap (1) of a flat die (2) for producing flat, web-like extruded products, such as films, wherein the flat die (2) has a flexible lip (3), along the length of which several actuating elements (4) are arranged at regular intervals for adjusting the gap profile of the lip (3), wherein each actuating element (4) comprises a drive (5), preferably in the form of a stepper motor, wherein the drive (5) actuates a push rod (6) which is pivotally connected to the longer arm of a double-sided lever (7), and wherein the shorter arm of the lever (7) interacts with a linearly guided pressure pin (8), which in turn acts on the flexible lip (3) to adjust the gap (1) in this region, **characterised in that** the two-sided lever (7) is an angle lever, wherein the longer arm of the lever (7) is arranged approximately in the same longitudinal direction as the pressure pins (8), and the shorter arm of the lever (7) extends approximately perpendicular to the longitudinal direction of the pressure pins (8).

2. The device for adjusting the gap (1) of a flat die (2) according to claim 1, **characterised in that** the push rod (6) is a spindle having an external thread, which engages with an internally threaded sleeve rotatable by the drive (5) and is connected to the joint (9) on the longer arm of the lever (7), or, conversely, the spindle is mounted directly rotatable by the drive (5) and engages with an internally threaded sleeve connected to the joint (9) on the longer arm of the lever (7).

3. The device for adjusting the gap (1) of a flat die (2) according to claim 1 or 2, **characterised in that** the actuating elements (4) are arranged in the region of the pressure pins (8) along the flat die (2) at a distance of approximately 2 cm to 3 cm, preferably approx. 2.5 cm, from one another.

4. The device for adjusting the gap (1) of a flat die (2) according to any one of claims 1 to 3, **characterised in that** the actuating elements (4) in the region of the drives (5) are arranged in two rows (10, 11) running parallel to the flat die (2) and offset relative to one another, such that, alternately, one actuating element (4) of one row (10) and one of the other row (11) are arranged next to one another.

5. The device for adjusting the gap (1) of a flat die (2) according to any one of claims 1 to 4, **characterised in that** the pressure pin (8) is guided linearly movable in a connecting element (14), wherein the connecting element (14) serves to connect the device to the flat die (2), and wherein the connecting element (14) is mountable via two webs (15) in a corresponding recess (16) on the flat die (2).

6. The device for adjusting the gap (1) of a flat die (2) according to any one of claims 1 to 5, **characterised in that** the pressure pin (8) is tapered or rounded at both ends, so that the contact points between the flexible lip (3) of the flat die (2) and the pressure pin (8), as well as between the pressure pin (8) and the double-sided lever (7), are as small as possible or almost point-like, thereby allowing only a minimal amount of direct heat transfer between these components.

7. The device for adjusting the gap (1) of a flat die (2) according to any one of claims 1 to 6, **characterised in that** a control unit is provided which is connected to all the drives (5) of all the actuating elements (4) of a flat die (2), wherein the control unit moves the individual actuating elements (4) into the desired position based on sensor data relating to the current thickness profile of the extruded product and/or based on user inputs.

## Revendications

1. Dispositif de réglage de la fente (1) d'une filière à fente large (2) destinée à la fabrication de produits d'extrusion en bande plate, tels que des films, dans lequel la filière à fente large (2) comporte une lèvre flexible (3) sur la longueur de laquelle sont disposés, à intervalles réguliers, plusieurs éléments de réglage (4) destinés à ajuster le profil de la fente de la lèvre (3), dans lequel chaque élément de réglage (4) comprend un entraînement (5), de préférence sous la forme d'un moteur pas à pas, dans lequel l'entraînement (5) actionne une tige de poussée (6) qui est reliée de manière articulée au bras le plus long d'un levier à deux bras (7), et dans lequel le bras le plus court du levier (7) coopère avec une tige de pression (8) à guidage linéaire, qui agit à son tour sur la lèvre flexible (3) afin de régler la fente (1) dans cette zone, **caractérisé en ce que** le levier à deux bras (7) est un levier coudé, dans lequel le bras le plus long du levier (7) est disposé approximativement dans la même direction longitudinale que les tiges de pression (8) et le bras le plus court du levier (7) s'étend approximativement perpendiculairement à la direction longitudinale des tiges de pression (8).

2. Dispositif de réglage de la fente (1) d'une filière à fente large (2) selon la revendication 1, **caractérisé en ce que** la tige de poussée (6) est une broche à filetage extérieur qui s'engage dans une douille rotative à filetage intérieur entraînée par l'entraînement (5) et est reliée à l'articulation (9) située sur le bras le plus long du levier (7), ou inversement, la broche est montée de manière à pouvoir être entraînée directement en rotation par l'entraînement (5) et s'engage dans une douille à filetage intérieur reliée à l'articulation (9) située sur le bras le plus long du levier (7).

3. Dispositif de réglage de la fente (1) d'une filière à fente large (2) selon l'une des revendications 1 ou 2, **caractérisé en ce que** les éléments de réglage (4) sont disposés, au niveau des tiges de pression (8), le long de la filière à fente large (2) à une distance d'environ 2 cm à 3 cm, de préférence d'environ 2,5 cm, les uns des autres.

4. Dispositif de réglage de la fente (1) d'une filière à fente large (2) selon l'une des revendications 1 à 3, **caractérisé en ce que** les éléments de réglage (4) sont disposés, au niveau des entraînements (5), en deux rangées (10, 11) parallèles à la filière à fente large (2) et décalées les unes par rapport aux autres, de sorte qu'un élément de réglage (4) d'une rangée (10) et un élément de réglage de l'autre rangée (11) se trouvent alternativement côte à côte.

5. Dispositif de réglage de la fente (1) d'une filière à fente large (2) selon l'une des revendications 1 à 4, **caractérisé en ce que** la tige de pression (8) est guidée de manière à pouvoir se déplacer linéairement dans un élément de raccordement (14), dans lequel l'élément de raccordement (14) sert à relier le dispositif à la filière à fente large (2), et dans lequel l'élément de raccordement (14) peut être logé, par l'intermédiaire de deux nervures (15), dans un logement correspondant (16) sur la filière à fente large (2).

6. Dispositif de réglage de la fente (1) d'une filière à fente large (2) selon l'une des revendications 1 à 5, **caractérisé en ce que** la tige de pression (8) est effilée ou arrondie aux deux extrémités, de sorte que les points de contact entre la lèvre flexible (3) de la filière à fente large (2) et la tige de pression (8) ainsi qu'entre la tige de pression (8) et le levier à deux bras (7) soient aussi petits que possible, voire quasi ponctuels, ce qui permet également un transfert thermique direct minimal entre ces composants.

7. Dispositif de réglage de la fente (1) d'une filière à fente large (2) selon l'une des revendications 1 à 6, **caractérisé en ce qu'**il est prévu une unité de commande qui est reliée à tous les entraînements (5) de tous les éléments de réglage (4) d'une filière à fente large (2), dans lequel l'unité de commande amène les différents éléments de réglage (4) dans la position souhaitée sur la base de données de capteurs concernant le profil d'épaisseur instantané du produit extrudé et/ou sur la base de saisies de l'utilisateur.
